# EUROPEAN PATENT APPLICATION

(11) **EP 4 848 513 A1**
(43) Date of publication of application: **02.12.2026**
(21) Application number: 26172666.5
(22) Date of filing: 16.04.2026
(51) Int. Cl.: H02J 3/007, H02J 9/06, H02J 13/12

(54) **RAPID TRANSFER FAULT CURRENT LIMITING ALGORITHMS FOR STATIC TRANSFER SWITCH CONTROL**

(30) Priority: 29.05.2025 US 202519221900
(71) Applicant: ABB Schweiz AG, 5400 Baden (CH)
(72) Inventor: DONG, Zhou, Cary 27519 (US); CAIROLI, Pietro, Cary 27511 (US); CHAVAN, Govind, Garner 27529 (US); SURYANARAYANA, Harish, Apex 27523 (US); ZHAO, Shuyan, Raleigh 27606 (US)
(74) Representative: Maiwald GmbH

(57) **Abstract**

Systems and methods for transferring a load between power sources using a static transfer switch by a controller may include monitoring voltage waveform of the power sources, in response to detecting a power quality event affecting a first power source, switching the first switch device off to disconnect the load from a first power source, determining a current limiting range for a second switch device using an algorithm based on an electric current at the second switch device, and selectively switching the second switch device on and off to connect the load to the second power source according to the current limiting range. The current limiting range includes an upper limit value and a lower limit value relative to a nominal current of the second switch device. The upper limit value is defined based on a maximum inrush current threshold.

## Description

### FIELD

This disclosure relates to the field of switching devices. More particularly, this disclosure relates to switching devices that provide rapid transfer fault current limiting algorithms for static transfer switch control.

### BACKGROUND

Static Transfer Switches (STS) are essential components to ensure seamless power transfer between two independent sources without interrupting power to a connected load in electrical power systems. STS are routinely used in critical applications like data centers, hospitals, and industrial facilities to continuously maintain supply of power to the load and to protect the load devices from electrical faults. When electrical fault events occur at the power source that is connected to the load, the STS can transfer the load from the faulty power source to the other power source to continuously maintain supply of power to the load. However, there is generally a delay according to a design of the STS and the techniques used to control the STS during the transfer, which spans from the time the STS disconnects the load from the faulty power source to the time the STS connects the load to the other power source. Accordingly, improved STS designed to reduce a delay time during the transfer process are desirable.

### SUMMARY

In some embodiments, a method includes monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch, in response to detecting a power quality event affecting the first power source, switching, with the controller, the first solid-state switch device off to disconnect the load from the first power source, determining, with the controller, a current limiting range for the second solid-state switch device using an algorithm based on an electric current at the second solid-state switch device, and selectively switching, with the controller, the second solid-state switch device on and off to connect the load to the second power source according to the current limiting range. In some embodiments, the current limiting range includes an upper limit value and a lower limit value relative to a nominal current of the second solid-state switch device. In some embodiments, the upper limit value is defined based on a maximum inrush current threshold.

In some embodiments, the controller is configured to selectively switch the second solid-state switch device on and off to connect the load to the second power source according to the current limiting range after the electric current at the first solid-state switch device decreases to a low current threshold.

In some embodiments, selectively switching the second solid-state switch device on and off to connect the load to the second power source includes in response to the monitored electric current falling under the lower limit value, switching, with the controller, the second solid-state switch device on and connecting the load to the second power source, and in response to the monitored electric current exceeding the upper limit value, switching, with the controller, the second solid-state switch device off and disconnecting the load to the second power source. In some embodiments, the controller is configured to selectively switch the second solid-state switch device on and off in accordance with the upper limit value and the lower limit value to maintain the electric current at a defined trajectory.

In some embodiments, the upper limit value and the lower limit value are fixed absolute values.

In some embodiments, determining the current limiting range for the second solid-state switch device using the algorithm includes calculating, with the controller, a reference current of the second power source based on a second power source voltage and a load impedance, and calculating, with the controller, a variable current limiting range for controlling the selective switching of the second solid-state switch device using the algorithm based on the electric current measured at the second solid-state switch device. In some embodiments, the variable current limiting range includes a variable upper current limit and a variable lower current limit determined based on the reference current.

In some embodiments, the controller is configured to calculate the variable current limiting range to shape a waveform of the electric current into a sinusoidal shape with a boundary following the reference current. In some embodiments, the controller is configured to improve a transfer time for connecting the load to the second power source and further improve the total harmonic distortion at a given phase of the electric current during the transfer based on the variable current limiting range.

In some embodiments, the method further includes calculating, with the controller, a third value corresponding to a flux at a load transformer, and in response to the flux at the load transformer matching a flux at the second solid-state switch device, switching, with the controller, the second solid-state switch device on to transfer the load to the second power source. In some embodiments, the third value is based on a flux of the first power source when the first solid-state switch device is switched off to disconnect the load from the first power source.

In some embodiments, the upper limit value is configured to be less than the maximum inrush current threshold of the second solid-state switch device and greater than the nominal current of the second solid-state switch device. In some embodiments, the lower limit value is configured to be greater than 0 A and less than the nominal current of the second solid-state switch device.

In some embodiments, a system includes a static transfer switch. In some embodiments, at least one phase of the static transfer switch includes a first solid-state switch device selectively operable to connect a load to a first power source, and a second solid-state switch device selectively operable to connect the load to a second power source, and a control circuit associated with the static transfer switch. In some embodiments, the control circuit is configured to perform operations including monitor a first voltage waveform of the first power source and a second voltage waveform of the second power source, in response to detecting a power quality event affecting the first power source, switch the first solid-state switch device off to disconnect the load from the first power source, determine a current limiting range for the second solid-state switch device using an algorithm based on an electric current at the second solid-state switch device, and selectively switch the second solid-state switch device on and off to connect the load to the second power source according to the current limiting range. In some embodiments, the current limiting range includes an upper limit value and a lower limit value relative to a nominal current of the second solid-state switch device. In some embodiments, the upper limit value is defined based on a maximum inrush current threshold.

In some embodiments, the control circuit is configured to selectively switch the second solid-state switch device on and off to connect the load to the second power source according to the current limiting range after the electric current at the first solid-state switch device decreases to a first current value.

In some embodiments, selectively switching the second solid-state switch device on and off to connect the load to the second power source includes in response to the monitored electric current falling under the lower limit value, switch the second solid-state switch device on and connecting the load to the second power source, and in response to the monitored electric current exceeding the upper limit value, switch the second solid-state switch device off and disconnecting the load to the second power source. In some embodiments, the control circuit is configured to selectively switch the second solid-state switch device on and off to maintain the electric current at a defined trajectory.

In some embodiments, the upper limit value and the lower limit value are fixed absolute values.

In some embodiments, determining the current limiting range for the second solid-state switch device using the algorithm includes calculate a reference current of the second power source based on a second power source voltage and a load impedance, and calculate a variable current limiting range for controlling the selective switching of the second solid-state switch device using the algorithm based on the electric current measured at the second solid-state switch device. In some embodiments, the variable current limiting range includes a variable upper current limit and a variable lower current limit determined based on the reference current.

In some embodiments, the control circuit is configured to calculate the variable current limiting range to shape a waveform of the electric current into a sinusoidal shape with a boundary following the reference current. In some embodiments, the control circuit is configured to improve a transfer time for connecting the load to the second power source and further improve the total harmonic distortion at a given phase of the electric current during the transfer based on the variable current limiting range.

In some embodiments, the upper limit value is less than the maximum inrush current threshold of the second solid-state switch device and greater than the nominal current of the second solid-state switch device. In some embodiments, the lower limit value is greater than a second current value and less than the nominal current of the second solid-state switch device.

In some embodiments, the selectively switching of the second solid-state switch device on and off to connect the load to the second power source further includes calculate a third value corresponding to a flux at a load transformer, and in response to the flux at the load transformer matching a flux at the second solid-state switch device, switch the second solid-state switch device on to transfer the load to the second power source. In some embodiments, the third value is based on a flux of the first power source when the first solid-state switch device is switched off to disconnect the load from the first power source.

In some embodiments, the first solid-state switch device includes at least one of a thyristor, a SiC metal-oxide-semiconductor field-effect-transistor, a Si insulated-gate bipolar transistor, or an integrated gate-commutated thyristor. In some embodiments, the second solid-state switch device includes at least one of the SiC metal-oxide-semiconductor field-effect-transistor, the Si insulated-gate bipolar transistor, or the integrated gate-commutated thyristor.

In some embodiments, the system further includes a first sensor device positioned on a first branch of the static transfer switch and coupled to the control circuit. In some embodiments, the first sensor device is configured to monitor at least one parameter of the first solid-state switch device. In some embodiments, the system further includes a second sensor device positioned on a second branch of the static transfer switch. In some embodiments, the second sensor device is configured to monitor at least one parameter of the second solid-state switch device. In some embodiments, the system further includes a comparator device configured to compare the at least one parameter of the second solid-state switch device to a first reference voltage corresponding to the upper limit value and a second reference voltage corresponding to the lower limit value. In some embodiments, the control circuit is configured to determine a turn-on instant and a turn-off instant of the second solid-state switch device based on an output signal from the comparator device.

In some embodiments, the system further includes a voltage clamping circuit coupled to at least the second solid-state switch device. In some embodiments, the voltage clamping circuit is configured to fix at least one of a positive or negative peak of a corresponding voltage waveform to a defined voltage. In some embodiments, during the selective switching of the second solid-state switch device to limit the electric current in the current limiting range, the control circuit is configured to monitor an energy dissipation at the second solid-state switch device and the voltage clamping circuit according to a corresponding thermal limit.

In some embodiments, the operations further includes monitoring a time period for transferring the load from the first power source to the second power source using the second solid-state switch device, and in response to the time period exceeding a time limit, switching the second solid-state switch device off to disconnect the load from the second power source. In some embodiments, the time limit is at least partially based on an energy dissipation capacity of the voltage clamping circuit coupled to at least the second solid-state switch device.

### BRIEF DESCRIPTION OF THE DRAWINGS

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure can be practiced.
FIG. 1 is a schematic diagram of a system, according to some embodiments.
FIG. 2 is a schematic diagram of the system, according to some embodiments.
FIG. 3 is a block diagram of a system, according to some embodiments.
FIG. 4 is a flow diagram of a method for transferring a load between power sources, according to some embodiments.
FIG. 5a is a graphical illustration of current-time waveforms for a primary side of a load transformer of an example system, according to some embodiments.
FIG. 5b is a graphical illustration of harmonics analysis charts for the example system of FIG. 5a, according to some embodiments.
FIG. 6 is a graphical illustration of a current-time waveforms for a secondary side of the load transformer of the example system of FIG. 5a, according to some embodiments.
FIG. 7a is a graphical illustration of current-time waveforms for a primary side of a load transformer of an example system, according to some embodiments.
FIG. 7b is a graphical illustration of harmonics analysis charts for the example system of FIG. 7a, according to some embodiments.
FIG. 8 is a flow diagram of a method for transferring a load between power sources using a FCL algorithm, according to some embodiments.
FIG. 9 is a flow diagram of a method for calculating a variable current limiting range, according to some embodiments.

### DETAILED DESCRIPTION

Static Transfer Switches (STSs) can be designed to ensure seamless power transfer between two independent sources such as, for example, utility power and backup generators, without interrupting a supply of electrical power to a connected load. STSs can be used to continuously maintain a supply of power to the connected load, which can include, for example and without limitation, data centers, hospitals, and industrial facilities.

Various embodiments of this disclosure relate to systems and methods for static transfer switch control using a fault current limiting (FCL) algorithm, which can, in some examples, be used to improve a transfer time for transferring a load between power sources in response to detecting a fault at the connected power source. For example, the connected power source can be a preferred power source and the other power source can be an alternate power source. The load can be connectable to each of the preferred power source and the alternate power source by corresponding solid-state switch devices of the static transfer switch. The static transfer switch can continuously monitor both power sources and the static transfer switch can be used to transfer the load from one power source to the other power source based on detection of an anomaly at the connected power source such as, for example, voltage fluctuations, frequency deviations, electrical faults, combinations thereof, or the like.

The static transfer switch control using the FCL algorithm can, in some embodiments, include monitoring a voltage waveform of a preferred power source and a voltage waveform of an alternate power source, in response to detecting a power quality event affecting the preferred power source, disconnecting the load from the preferred power source by the static transfer switch, calculating a current limiting range for the static transfer switch based on an electric current at the static transfer switch from the alternate power source using the FCL algorithm, and selectively switching corresponding switch device(s) of the static transfer switch on and off to connect the load to the alternate power source according to the calculated current limiting range. The current limiting range can include an upper limit value and a lower limit value relative a nominal electric current of the static transfer switch. The current limiting range can be configured to maintain the electric current at the corresponding switch device(s) that connect the load to the alternate power source below a maximum inrush current threshold.

When utilizing a conventional STS in electrical systems, there can be a time delay between the time the STS disconnects a load from a faulty power source to the time the STS connects the load to the other power source in response to detecting an electrical fault at the power source connected to the load. This time delay can be designed to limit inrush current at the STS from transformer flux mismatch. Some conventional STS systems can utilize thyristor-based switches, which require waiting for zero-crossing of the current to turn off the thyristor-based switches, thus increasing the transfer time. The various embodiments described herein can improve upon thyristor-based switches by being able to immediately turn off the switch(es) connecting the load to the faulty power source instead of having to wait for zero-crossing of the current to disconnect the load from the faulty power source.

Some other conventional STS systems can utilize Silicon Carbide (SiC) MOSFETs as solid-state switch devices to connect the load to a respective power source. SiC MOSFETs can offer controllable turn-off capabilities for faster transfer times and improved protection coordination compared to thyristor-based switches. Although conventional STS including SiC MOSFETs can demonstrate improved transfer times compared to thyristor-based STS, further improvements to the transfer times of STS including SiC MOSFETs are desirable to improve the time duration that the load experiences loss of power. However, conventional control algorithms for controlling the switching operation of the SiC MOSFETs of conventional STS during the transfer process can demonstrate time delays from waiting for the alternative source voltage to match the transformer flux before turning on the alternative SiC MOSFETs of the STS so as to limit inrush current at the static transfer switch when connecting the load to the alternate power source.

The various embodiments of this disclosure implement static transfer switch control using the FCL algorithm to improve transfer times over thyristor-based static transfer switches and conventional STS control algorithms by initiating the transfer process to connect the load to the alternate power source at an instance that the electric current at the preferred solid-state switch device of the STS reduces to or near to a current threshold, after being turned off to disconnect the load from the preferred power source. During the transfer process, the FCL algorithm can selectively control the alternate solid-state switch devices (e.g., SiC MOSFETs) that connect the load to the alternate power source to turn on and off based on a current limiting range. The various embodiments of the STS control in accordance with the FCL algorithm can improve transfer times (e.g., reduce transfer times) when switching between power sources and can also improve the time duration that the load experiences power loss, as well as reduce the harmonics during transfers.

According to some embodiments, electrical systems can include energy storage devices (e.g., capacitors) that store electrical energy during a nominal condition, and which can be designed to continuously maintain supply of electrical power to the load for a limited duration when there is an interruption in the power supplied to the load such as, for example, from the time delay during the transfer process when switching between power sources due to an electrical fault at the preferred power source. As such, the energy storage devices can be selected based on factors including, for example, their energy storage capacity and amount of time the energy storage devices can supply power to the load during power interruptions. Higher energy storage capacity and power supply requirements for a given load typically necessitate installing larger energy storage devices compared to lower energy storage capacity and power supply requirements. By improving the transfer times of the STS, and thereby improving the duration that the load can experience power loss, the FCL algorithm can allow for smaller energy storage devices to be utilized in the system compared to conventional STS systems. This can decrease the space requirements for the energy storage devices in a facility and can also reduce the overall system cost.

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that can be embodied in various forms. In addition, each of the examples given regarding the various embodiments of the disclosure which are intended to be illustrative, and not restrictive.

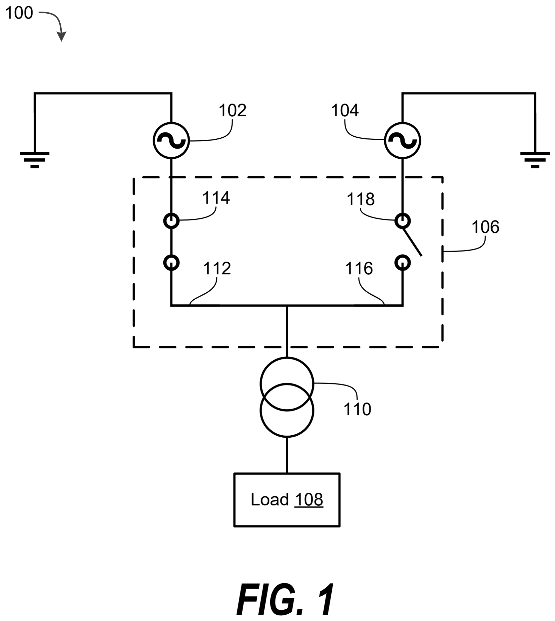

FIG. 1 is a schematic diagram of a system 100, according to some embodiments. The system 100 can be an alternating current (AC) electrical system. The system 100 can include a first power source 102, a second power source 104, a static transfer switch 106, and a load 108. The first power source 102 can, in some embodiments, be a preferred power source. For example, the first power source 102 can include a utility grid. The second power source 104 can, in some embodiments, be a secondary power source. For example, the second power source 104 can include at least one of a generator, batteries, solar power, combinations thereof, or some other like power source(s). The load 108 can include one or more devices that depends on continuous delivery of power from one of the first power source 102 and second power source 104. For example, the load 108 can include devices associated with a data center. In some embodiments, the system 100 can further include a load transformer 110. The load transformer 110 can be located between the static transfer switch 106 and the load 108.

The static transfer switch 106 can include a first branch 112 including a first solid-state switch device 114 and a second branch 116 including a second solid-state switch device 118. The first branch 112 can be coupled to the first power source 102 and the load 108. The second branch 116 can be coupled to the second power source 104 and the load 108. At the first branch 112, the first solid-state switch device 114 can be switched closed (turned on) to connect the first power source 102 to the load 108 and the first solid-state switch device 114 can be switched open (turned off) to disconnect the first power source 102 from the load 108 in accordance with a fault current limiting (FCL) algorithm. In addition, at the second branch 116, the second solid-state switch device 118 can be switched closed (turned on) to connect the second power source 104 to the load 108 and the second solid-state switch device 118 can be switched open (turned off) to connect the second power source 104 to the load 108 in accordance with the fault current limiting algorithm.

First solid-state switch device 114 of static transfer switch 106 can be a controllable switch device. First solid-state switch device 114 of static transfer switch 106 can, in some embodiments, include a thyristor. First solid-state switch device 114 of static transfer switch 106 can, in some embodiments, be a thyristor-based switch.

Second solid-state switch device 118 of static transfer switch 106 can be a controllable switch device having a fast switching frequency to transfer load 108 between first power source 102 and second power source 104 using the FCL algorithm. Second solid-state switch device 118 of static transfer switch 106 can, in some embodiments, include a SiC metal-oxide-semiconductor field-effect-transistor (MOSFET), a SiC integrated-gate bipolar transistor (IGBT), an integrated gate-commutated thyristor (IGCT), other similar switch devices capable of high frequency switching, or any combination thereof.

First solid-state switch device 114 and second solid-state switch device 118 of static transfer switch 106 can have a fast switching frequency to transfer load 108 between first power source 102 and second power source 104 in accordance with the FCL algorithm, as will be further described herein. First solid-state switch device 114 and second solid-state switch device 118 of static transfer switch 106 can, in some embodiments, include SiC MOSFETS, SiC IGBTs, IGCTs, other similar switch devices capable of high frequency switching, or any combination thereof. First solid-state switch device 114 and second solid-state switch device 118 of static transfer switch 106 can, in some embodiments, be SiC MOSFETs. In other embodiments, first solid-state switch device 114 and second solid-state switch device 118 of static transfer switch 106 can be other types of switch devices capable of fast frequency switching operations in accordance with the FCL algorithm described herein.

In one example, during a nominal condition, first solid-state switch device 114 can be switched closed such that load 108 is connected to first power source 102. Responsive to detecting some fluctuation at first power source 102 such as, for example, an electrical fault event associated with first power source 102, first solid-state switch device 114 of static transfer switch 106 can be switched open (turned off) by the FCL algorithm to disconnect load 108 from first power source 102 by the first solid-state switch device 114, and the second solid-state switch device 118 can be switched closed such that the static transfer switch 106 begins transferring the load to the second power source 104 in accordance with the current limiting algorithm of this disclosure. In some embodiments, the first solid-state switch device 114 can be switched open at a same instant as the electrical fault is detected at the first power source 102. In some embodiments, the second solid-state switch device 118 can be switched closed at a same instant as the first solid-state switch device 114 is switched open. In other embodiments, the second solid-state switch device 118 can be switched closed at a same instant that the current at the first solid-state switch device 114 reaches a zero threshold.

First solid-state switch device 114 and second solid-state switch device 118 may be selectively controllable to transfer the load between first power source 102 and second power source 104 according to the FCL algorithm. The static transfer switch 106 can, in some embodiments, include one or more first solid-state switch device 114 to connect load 108 to first power source 102 at each phase, and can include one or more second solid-state switch device 118 to connect load 108 to second power source 104 at each phase. For example, first power source 102 may be a three-phase power source and static transfer switch 106 may connect load 108 to first power source 102 at each of the three-phases. For example, second power source 104 may be a three-phase power source and static transfer switch 106 may connect load 108 to second power source 104 at each of the three-phases. Although the static transfer switch 106 of FIG. 1 shows one first solid-state switch device 114 located on first branch 112 and one second solid-state switch device 118 located on second branch 116, it should be appreciated that the static transfer switch 106 can, in some embodiments, include one or more branches, and each branch can include one or more solid-state switch devices to connect load 108 to a respective phase of the corresponding power source based on the condition of the system 100.

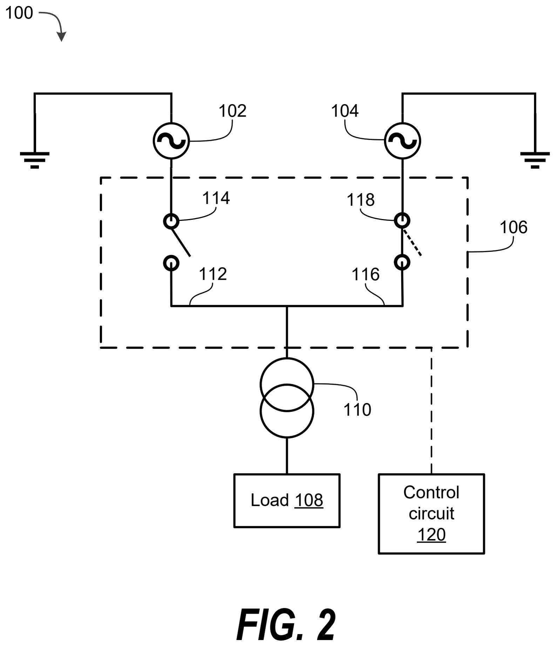

FIG. 2 is a schematic diagram of the system 100, according to some embodiments. The system 100 of FIG. 2 illustrates an example process of transferring load 108 from the first power source 102 to the second power source 104 using the FCL algorithm, according to some embodiments.

The system 100 can, in some embodiments, include a control circuit 120. The control circuit 120 can be coupled to one or more components of the system 100. The control circuit 120 can, in some embodiments, be coupled to the static transfer switch 106, and the control circuit 120 can control an operation of static transfer switch 106. The control circuit 120 can, in some embodiments, selectively control a position of each of the first solid-state switch device 114 and the second solid-state switch device 118 of the static transfer switch 106 so as to maintain a continuous supply of power to the load 108 from one of the first power source 102 and the second power source 104 responsive to the detected parameters of the first power source 102 and the second power source 104.

During a nominal condition, the control circuit 120 can, in some embodiments, connect the load 108 to a preferred one of the first power source 102 and the second power source 104 by driving the corresponding one of the first solid-state switch device 114 and the second solid-state switch device 118 of the static transfer switch 106 to the closed position.

Responsive to detecting an abnormal condition such as, for example, an electrical fault at the power source (e.g., preferred power source) connected to the load, the control circuit 120 can, in some embodiments, drive a corresponding one of the first solid-state switch device 114 and the second solid-state switch device 118 of the static transfer switch 106 connecting the load 108 to the abnormal power source to turn off and switch to the open position to disconnect the load 108 from the power source at an instance of the fault detection. The control circuit 120 can, in some embodiments, drive a corresponding other one of the first solid-state switch device 114 and the second solid-state switch device 118 to turn on and switch to the closed position at an instance electric current at the opened solid-state switch device reduces to or near to a low current threshold to transfer the load 108 to the other power source (e.g., alternate power source). During the transfer process, the control circuit 120 can, in some embodiments, drive the corresponding other one of the first solid-state switch device 114 and the second solid-state switch device 118 to selectively switch open and closed to maintain electric current at the switch device within a current limiting range.

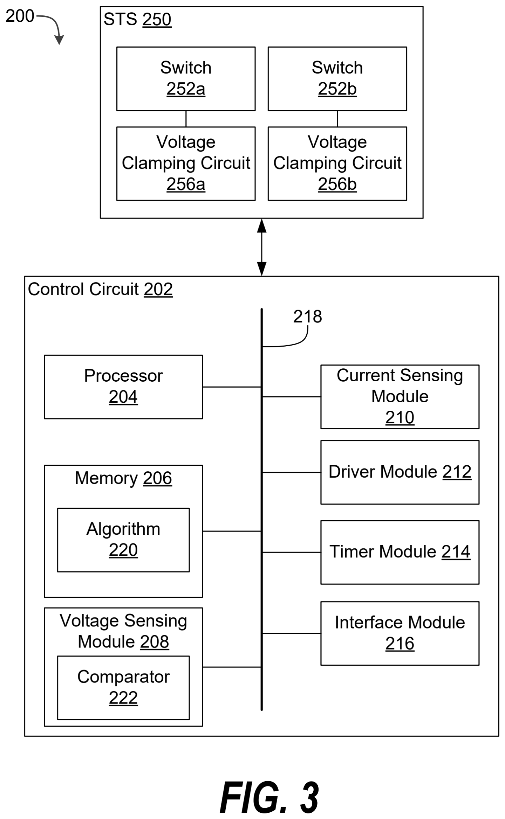

FIG. 3 is a block diagram of a system 200, according to some embodiments. The system 200 can be implemented with any combination of components or sub-systems of system 100 of FIG. 1 or FIG. 2. System 200 can be an embodiment of system 100 of FIG. 1, according to some embodiments.

System 200 can include a control circuit 202 and a static transfer switch (STS) 250 coupled to control circuit 202. Control circuit 202 can be an embodiment of control circuit 120 of FIG. 2, according to some embodiments. Control circuit 202 can control one or more components of system 200. Control circuit 202 can be coupled to one or more components including STS 250, and control circuit 202 can control an operation of the electrical components of STS 250, as will be further described herein.

STS 250 can, in some embodiments, correspond to static transfer switch 106 of FIG. 1 or FIG. 2. STS 250 can include multiple switches 252 (shown as switch 252a, 252b). Switch 252a can, in some embodiments, be positioned on a first branch of the STS 250. Switch 252b can, in some embodiments, be positioned on a second branch of the STS 250. Each switch 252 can also include a voltage clamping circuit 256 (shown as voltage clamping circuit 256a, 256b) coupled to the switch 252. For a given switch 252, the corresponding voltage clamping circuit 256 can be configured to fix at least one of a positive or negative peak of a corresponding voltage waveform to a defined voltage. The voltage clamping circuits 256 can be configured to fix the voltage waveform at the corresponding switch device 252 to the defined voltage based on an output signal from the comparator, as will be further described herein. In some embodiments, STS 250 can include a voltage clamping circuit 256a coupled to switch device 252a and a voltage clamping circuit 256b coupled to switch device 252b.

The control circuit 202 can, in some embodiments, include a processor 204, a memory 206, a voltage sensing module 208, a current sensing module 210, a driver module 212, a timer module 214, and an interface module 216. Control circuit 202 can include a bus 218. Each module of control circuit 202 can be in electronic communicable connection with one or more other modules of control circuit 202 via bus 218. In some embodiments, control circuit 202 can be referred to herein as a controller, and control circuit 202 can be configured to monitor electrical parameters of the system 200 and control one or more components of system 200 responsive to the measured parameters in accordance with a control logic including, for example, the FCL algorithm. For example, the control circuit 202 can operate the static transfer switch 106 (FIG. 1 or FIG. 2) to transfer the load from the first power source 102 (FIG. 1 or FIG. 2) to the second power source 104 (FIG. 1 or FIG. 2) responsive to detecting an abnormal condition at the first power source 102 (FIG. 1 or FIG. 2).

The processor 204 can be configured to execute instructions stored in memory 206. The instructions stored in memory 206 can, in some embodiments, include a control logic for control circuit 202. The instructions stored in memory 206 can include algorithm 220. The control circuit 202 can utilize algorithm 220 to control an operation of static transfer switch 106 (FIG. 1 or FIG. 2) to transfer load 108 (FIG. 1 or FIG. 2) from first power source 102 (e.g., preferred power source) to the second power source 104 (e.g., alternate power source). In some embodiments, control circuit 202 can monitor one or more electrical parameters of static transfer switch 106 (FIG. 1 or FIG. 2) including, for example and without limitation, an electric current at each solid-state switch device using one or more sensor devices, and the control circuit 202 can control an operation of the static transfer switch 106 using algorithm 220 based on the sensed electrical parameters during the transfer process. In some embodiments, the control circuit 202 can disconnect load 108 (FIG. 1 or FIG. 2) from first power source 102 by driving first solid-state switch device 114 to turn off and switch open. In some embodiments the control circuit 202 can transfer load 108 (FIG. 1 or FIG. 2) to second power source 104 by selectively switching second solid-state switch device 118 to turn on and off and switch closed and opened to transfer load 108 (FIG. 1 or FIG. 2) to second power source 104. In some embodiments, control circuit 202 can selectively switch second solid-state switch device 118 to turn on and off during the transfer process according to a current limiting range. In some embodiments, during the selective switching of a corresponding one of the switch devices 252 used to connect the load to the alternate power source, the control circuit 202 can be configured to monitor an energy dissipation at the switch device 252 and the corresponding voltage clamping circuit 256 according to a corresponding thermal limit. The energy dissipation can be monitored using one or more sensors (not shown), according to some embodiments. It should be appreciated that the control circuit 202 can control the static transfer switch 106 to transfer the load 108 (FIG. 1 or FIG. 2) from first power source 102 to second power source 104 or from second power source 104 to first power source 102 based on which one of first power source 102 or second power source 104 the load 108 (FIG. 1 or FIG. 2) is connected to by static transfer switch 106 (FIG. 1 or FIG. 2).

System 200 can include sensors (not shown) to measure electrical parameters at different locations of an AC electrical distribution system including, for example, first power source 102, second power source 104, static transfer switch 106, first solid-state switch device 114, second solid-state switch device 118, load 108, load transformer 110, other components, or any combination thereof, of FIG. 1. Control circuit 202 can, in some embodiments, be connected to the sensors (not shown) to monitor the electrical parameters. The sensors (not shown) can, in some embodiments, include voltage sensors to sense a voltage waveform of the different components. System 200 can, in some embodiments, include a sensor device (not shown) positioned at a first branch of the STS 250 and configured to monitor at least one parameter of the switch device 252a (e.g., first solid-state switch device) and can include a sensor device (not shown) positioned on a second branch of the STS 250 and configured to monitor at least one parameter of the switch device 252b (e.g., second solid-state switch device).

Control circuit 202 can, in some embodiments, be connected to the voltage sensors, and voltage sensing module 208 can monitor voltage waveforms of system 200 based on electrical signals received from the voltage sensors. The voltage sensing module 208 can, in some embodiments, monitor a voltage waveform of each power source using the sensors. For example, the voltage sensing module 208 can monitor a voltage waveform of the first power source 102 and second power source 104 of FIG. 1 or FIG. 2. The control circuit 202 can, in some embodiments, detect for fluctuations indicative of abnormal conditions at the power source connected to load 108 based on the sensor measurements using voltage sensing module 208. Voltage sensing module 208 can, in some embodiments, also be used to measure the input voltage of load transformer 110 (FIG. 1), and the control circuit 202 can estimate the flux of the load transformer 110 (FIG. 1) during transfers.

Control circuit 202 can, in some embodiments, include a comparator 222. Comparator 222 can be a circuit or device embodied in control circuit 202 and/or one of its modules and configured to compare parameters of the switch devices 252 to corresponding reference voltages. In some embodiments, the comparator 222 can be configured to compare the at least one parameter of the alternate switch device to a first reference voltage corresponding to the upper limit value and a second reference voltage corresponding to the lower limit value. The alternate switch device can be, in some embodiments, switch device 252a or switch device 252b. In some embodiments, switch device 252a can correspond to first solid-state switch device 114 of FIG. 1 and switch device 252b can correspond to second solid-state switch device 118 of FIG. 1. Control circuit 202 can be configured to determine a turn-on instant and a turn-off instant of the switch devices 252 based on an output from the comparator 222. In some embodiments, control circuit 202 can determine the turn-on instant and a turn-off instant of the switch device 252a based on an output signal from the comparator 222. In other embodiments, control circuit 202 can determine the turn-on instant and a turn-off instant of the switch device 252b based on an output signal from the comparator 222. In some embodiments, voltage sensing module 208 can include the comparator 222.

The sensors (not shown) can, in some embodiments, include current sensors to sense an electric current of system 200. Control circuit 202 can, in some embodiments, be connected to the current sensors, and current sensing module 210 can monitor electric current of system 200 based on electrical signals received from the current sensors. The current sensing module 210 can, in some embodiments, monitor an electrical current of static transfer switch 106 (FIG. 1 or FIG. 2). For example, in some embodiments, the current sensing module 210 can monitor electric current from first power source 102 (FIG. 1 or FIG. 2) at first solid-state switch device 114 (FIG. 1 or FIG. 2). In another example, in some embodiments, the current sensing module 210 can monitor electric current from second power source 104 (FIG. 1 or FIG. 2) at second solid-state switch device 118 (FIG. 1 or FIG. 2). The control circuit 202 can, in some embodiments, receive the electrical signals representative of the electric current at the one of the first solid-state switch device 114 (FIG. 1 or FIG. 2) and second solid-state switch device 118 (FIG. 1 or FIG. 2) of static transfer switch 106 (FIG. 1 or FIG. 2) being selectively controlled to turn on and off (i.e., switch closed and open) to limit the current at the switch based on a defined current limiting range during the transfer process. In some embodiments, the defined current limit can be a variable current limit determined by algorithm 220.

The control circuit 202 can, in some embodiments, determine a starting phase angle for the power source being connected to load 108 (FIG. 1 or FIG. 2) by static transfer switch 106 during the transfer process, according to some embodiments. The starting phase angle can refer to an initial angular position of a voltage waveform of the power source (e.g., alternate power source) when initially connected to load 108 (FIG. 1 or FIG. 2) during, for example, the transfer process using algorithm 220. For example, control circuit 202 can calculate a starting phase angle of second power source 104 (FIG. 1 or FIG. 2) based on the voltage waveform from the corresponding voltage sensor when transferring load 108 (FIG. 1 or FIG. 2) from first power source 102 (FIG. 1 or FIG. 2) to second power source 104 (FIG. 1 or FIG. 2) using static transfer switch 106 (FIG. 1 or FIG. 2).

The driver module 212 can include gate drivers to output gate signals to cause corresponding solid-state switch devices of the static transfer switch 106 (FIG. 1 or FIG. 2) to switch open and closed (i.e., turn off and on). Driver module 212 can, in some embodiments, output a first gate signal to drive a corresponding solid-state switch device of the static transfer switch 106 (FIG. 1 or FIG. 2) to switch closed (or turn on). The first gate signal can turn on the solid-state switch device of static transfer switch 106 (FIG. 1 or FIG. 2) to cause the switch to close and connect load 108 (FIG. 1 or FIG. 2) to the corresponding power source. The second gate signal can turn off the solid-state switch device of static transfer switch 106 (FIG. 1 or FIG. 2) to cause the switch to open and disconnect load 108 (FIG. 1 or FIG. 2) from the corresponding power source. For example, to transfer load 108 (FIG. 1 or FIG. 2) to second power source 104 (FIG. 1 or FIG. 2) from first power source 102 (FIG. 1 or FIG. 2), driver module 212 can selectively output the first gate signal to drive second solid-state switch device 118 (FIG. 1 or FIG. 2) to switch close (i.e., turn on) responsive to the current at second solid-state switch device 118 (FIG. 1 or FIG. 2) exceeding or reaching a lower current limit of the current limiting range, and driver module 212 can output a second gate signal to drive second solid-state switch device 118 (FIG. 1 or FIG. 2) to switch open (i.e., turn off) responsive to the current at second solid-state switch device 118 (FIG. 1 or FIG. 2) exceeding or reaching an upper current limit of the current limiting range.

Timer module 214 can measure a time period of the transfer process by static transfer switch 106 (FIG. 1 or FIG. 2) using algorithm 220. The time period can, in some embodiments, span between a first instance and a second instance. The first instance can, in some embodiments, correspond to when the alternative switch of static transfer switch 106 (FIG. 1 or FIG. 2) is turned on. The second instance can, in some embodiments, correspond to a time when load transformer 110 (FIG. 1 or FIG. 2) flux matches with the prospective flux of the alternative power source. In this regard, control circuit 202 can control the electric current at the alternate switch to match load transformer 110 (FIG. 1 or FIG. 2) flux to the alternate power source by selectively switching the alternative switch using algorithm 220.

The timer module 214 can, in some embodiments, also calculate a time limit for transferring the load from the faulty power source to the working power source. The calculated time limit can, in some embodiments, be a prediction of a total transfer time to transfer the load to the alternate power source from the preferred power source using static transfer switch 106 (FIG. 1 or FIG. 2) based on, for example, a starting angle of the transfer and a current limiting range of the static transfer switch 106 (FIG. 1 or FIG. 2). For example, timer module 214 can calculate a time limit threshold for transferring load 108 (FIG. 1 or FIG. 2) from first power source 102 (FIG. 1 or FIG. 2) to second power source 104 (FIG. 1 or FIG. 2) using second solid-state switch device 118 (FIG. 1 or FIG. 2) of the static transfer switch 106 (FIG. 1 or FIG. 2) based on the starting angle of second power source 104. For example, timer module 214 can calculate a time limit threshold for transferring load 108 (FIG. 1 or FIG. 2) from first power source 102 (FIG. 1 or FIG. 2) to second power source 104 (FIG. 1 or FIG. 2) using second solid-state switch device 118 (FIG. 1 or FIG. 2) of the static transfer switch 106 (FIG. 1 or FIG. 2) based on the current limiting range of second solid-state switch device 118 (FIG. 1 or FIG. 2) of static transfer switch 106 (FIG. 1 or FIG. 2).

The control circuit 202 can be in electronic communicable connection with one or more other components of the system 200 through the interface module 216. In some embodiments, the interface module 216 can connect control circuit 202, or one or more modules thereof, to the sensors (not shown) of system 200 to monitor the electrical parameters of system 200 based on the received measurement signals from the sensors (not shown). The functional modules of control circuit 202 can include circuitry to process the electrical measurement signals from the sensors to determine the electrical parameters, and which can be used to control the operation of static transfer switch 106 (FIG. 1 or FIG. 2) of system 200. Control of static transfer switch 106 based on the processed measurement signals can include, for example, initiating a transfer from the preferred power source to the alternate power source based on detecting an abnormal condition (e.g., fluctuations) at the preferred power source connected to the load 108 (FIG. 1 or FIG. 2). In some embodiments, the interface module 216 can be connected to static transfer switch 106 (FIG. 1 or FIG. 2) to control an operation of the solid-state switch devices of static transfer switch 106 to transfer load 108 (FIG. 1 or FIG. 2) to one of first power source 102 (FIG. 1 or FIG. 2) and second power source 104 (FIG. 1 or FIG. 2) from the other of first power source 102 (FIG. 1 or FIG. 2) and second power source 104 (FIG. 1 or FIG. 2). In some embodiments, interface module 216 can be connected to first solid-state switch device 114 (FIG. 1 or FIG. 2) to send gate signals to turn first solid-state switch device 114 on and off to cause the first solid-state switch device 114 to switch closed and open, respectively. In some embodiments, interface module 216 can be connected to second solid-state switch device 118 to send gate signals to turn second solid-state switch device 118 on and off to cause the second solid-state switch device 118 to switch closed and open, respectively. It is to be appreciated that control circuit 202 can be connected to other components or devices of system 200 through the interface module 216. For example, the control circuit 202 can be connected to one or more circuit breakers to serve as backup circuit interrupters between the load and the power sources. For example, the control circuit 202 can be connected to a computing device via the interface module 216 such that a user can input parameters of the static transfer switch 106 including, but not limited to, a nominal inrush current, a current limiting range including an upper and lower current limit, an inrush current threshold, a time limit threshold, a look-up table, other parameters, or any combination thereof.

The control circuit 202 can use one or more of the modules to monitor the electrical parameters of system 200, and the control circuit 202 can operate the solid-state switch devices of static transfer switch 106 (FIG. 1 or FIG. 2) to transfer load 108 (FIG. 1 or FIG. 2) between the preferred and alternate power sources based on detecting a fluctuation indicative of an abnormal condition at the connected power source (e.g., preferred power source). When transferring load 108 (FIG. 1 or FIG. 2) from the preferred power source to the alternate power source, for example, control circuit 202 can control the alternate switch(es) of static transfer switch 106 (FIG. 1 or FIG. 2) to connect load 108 to the alternate power source based on the sensed electrical parameters of system 200. For example, based on the measured electrical parameters, control circuit 202 can determine a flux at load transformer 110 (FIG. 1 or FIG. 2) when static transfer switch 106 (FIG. 1 or FIG. 2) disconnects first power source 102 (FIG. 1 or FIG. 2) from load 108 (FIG. 1 or FIG. 2) in response to a ground fault at first power source 102 (FIG. 1 or FIG. 2), determine a starting angle of second power source 104 (FIG. 1 or FIG. 2) when initiating the transfer process using algorithm 220, and determine when transfer is complete based on the flux of load transformer 110 (FIG. 1 or FIG. 2) matching with second power source 104 (FIG. 1 or FIG. 2).

According to some embodiments, the control circuit 202 can apply the measured electrical parameters of system 200 to algorithm 220 to transfer load 108 (FIG. 1 or FIG. 2) between the power source. When the preferred switch current Ipri falls to below the low current threshold following turn-off of the preferred solid-state switch device, control circuit 202 can turn-on the alternate solid-state switch device of static transfer switch 106 (FIG. 1 or FIG. 2) to transfer the load 108 (FIG. 1 or FIG. 2) to the alternate power source. The algorithm 220 of control circuit 202 can be used to selectively switch the alternate solid-state switch device off and on to maintain load current at the alternate switch Isec between an upper limit threshold Ilim_u and a lower limit threshold Ilim_1. In some embodiments, the algorithm 220 can turn on the alternate switch of static transfer switch 106 (FIG. 1 or FIG. 2) when the switch current Isec is less than the Ilim_1, and the algorithm 220 can turn off the alternate switch of static transfer switch 106 (FIG. 1 or FIG. 2) when the switch current Isec is greater than the Ilim_u. In other embodiments, the algorithm 220 can turn on the alternate switch of static transfer switch 106 (FIG. 1 or FIG. 2) when the switch current Isec is less than or equal to the Ilim_l, and the algorithm 220 can turn off the alternate switch of static transfer switch 106 (FIG. 1 or FIG. 2) when the switch current Isec is greater than or equal to the Ilim_u. The upper limit threshold Ilim_u can, in some embodiments, be set based on an inrush current threshold of static transfer switch 106 (FIG. 1 or FIG. 2). The inrush current threshold of static transfer switch 106 (FIG. 1 or FIG. 2) can, in some embodiments, be based on a thermal limit of the solid-state switch device of static transfer switch 106. The lower limit threshold Ilim_l can, in some embodiments, be set between 0 A and the upper limit Ilim_u.

During the transfer process, to connect the load to the alternate power source, control circuit 202 can, in some embodiments, maintain load current at the alternate switch within a defined current limiting range using algorithm 220. In some examples, control circuit 202 can continue to selectively switch the alternate solid-state switch device of static transfer switch on and off to maintain load current at the alternate switch within the defined current limiting range until a load transformer flux matches the prospective flux generated by the alternate power source using algorithm 220. During the transfer process, to connect the load to the alternate power source, control circuit 202 can, in other embodiments, maintain load current at the alternate switch within a variable current limiting range using algorithm 220. In some examples, control circuit 202 can continue to selectively switch the alternate solid-state switch device of static transfer switch on and off to maintain load current at the alternate switch within the variable current limiting range until a load transformer flux matches that of the alternate power source. The variable current limiting thresholds, or variable upper and lower current limits, can, in some embodiments, be based on a reference current calculated from the alternative power source. The reference current can, in some embodiments, be determined by calculating an optimal trajectory of the current limiting/hysteresis control, which can, in some embodiments, be based on estimation of the flux of the load transformer or the phasor of the current.

The variable current limiting range can result in a sinusoidal AC waveform with less harmonics during the transfer process compared to a current limiting range having fixed boundaries, e.g., fixed upper and lower current limits. For example, in system 200, transferring the load from the preferred power source to the alternate power source using the variable current limiting range can result in a total harmonic distortion of 10.7% for a first phase, and transferring the load from the preferred power source to the alternate power source using the fixed current limiting range can result in a total harmonic distortion of 15.4% for the first phase. Control circuit 202 can, in some embodiments, selectively switch the alternate switch or switches open and close to maintain load current within the current limiting range until 90% RMS voltage of a first line cycle after a clemency time is achieved at the alternate switch using algorithm 220.

The control circuit 202 can, in some embodiments, include a timer used to control the switching of the alternate switches of static transfer switch 106 using algorithm 220. The control circuit 202 can measure the time to, in some embodiments, mark completion of the transfer using algorithm 220 with a transfer time limit of Ttrans_max. The transfer time limit Ttrans_max can be set according to one or more parameters of the system. For example, the transfer time limit Ttrans_max can be based on a thermal limit (e.g., energy dissipation capacity) of the corresponding voltage clamping circuit 256 and/or the switch devices 252 of the STS 250. In some embodiments, the transfer time limit Ttrans_max can also be further based on a user input. In one example, the transfer time limit Ttrans_max can be set at 20 msec, although other times are possible. In another example, the transfer time limit Ttrans_max can be set at 10 msec. In some embodiments, the control circuit 202 can control the switching of the static transfer switch 106 (FIG. 1 or FIG. 2) using algorithm 220 until the load transformer 110 (FIG. 1 or FIG. 2) flux matches the alternate power source or until the timer reaches the transfer time limit Ttrans_max, which can be indicative of some fault in the system and that the transfer process should be stopped.

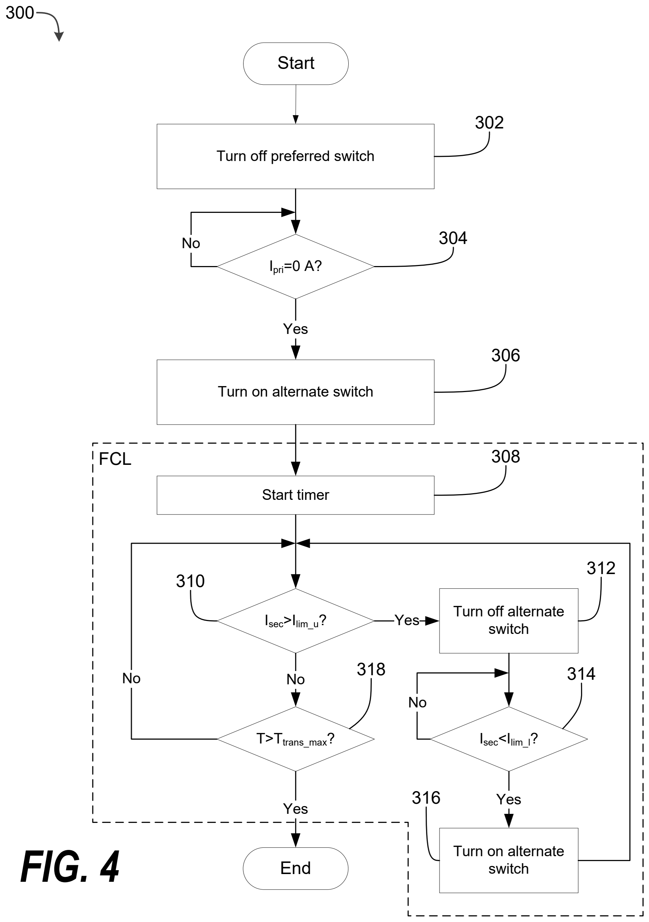

FIG. 4 is a flow diagram of a method 300 for transferring a load between power sources, according to some embodiments. The method 300 can, in some embodiments, be implemented using the system 100 of FIG. 1 or FIG. 2, or the system 200 of FIG. 3.

At 302, the method 300 can include turning off a preferred switch. Turning off the preferred switch can disconnect the load 108 (FIG. 1 or FIG. 2) from the preferred power source. For example, the first power source 102 (FIG. 1 or FIG. 2) can be the preferred power source. The static transfer switch 106 (FIG. 1 or FIG. 2) can, in some embodiments, include preferred switch. The preferred switch can, in some embodiments, include one or more switches. For example, the static transfer switch 106 (FIG. 1 or FIG. 2) can include a preferred switch connecting each phase of the preferred power source to the load 108 (FIG. 1 or FIG. 2).

At 304, the method 300 can include determining whether the load current at the preferred switch Ipri has fallen below a low current threshold. In some embodiments, the low current threshold can be at or near 0 A (Amps). In some embodiments, the low current threshold can be 0 to 2 A. The low current threshold may be utilized to determine whether the load current at the preferred switch has decreased to a current suitable to connect the alternate switch to limit an inrush current at the static transfer switch 106. The method 300 can, in some embodiments, include continuing to monitor the load current at the preferred switch until the load current at the preferred switch is at or near 0 A as determined based on the low current threshold.

At 306, the method 300 can include turning on the alternate switch. The alternate switch can, in some embodiments, be turned on in response to the load current at the preferred switch exceeding (e.g., falling below) the low current threshold. The alternate switch can, in some embodiments, be turned on when the load current at the primary switch is close to 0 A to limit an inrush current at the static transfer switch 106 (FIG. 1 or FIG. 2).

At 308, the method 300 can include starting a timer. The timer can be started to measure a time of implementing a fault current limiting (FCL) algorithm such as, for example, algorithm 220 (FIG. 3). It should be appreciated that the timer can be started following the turning on of the alternate switch, or at other time periods during method 300. For example, in some embodiments, the timer can be started following the turning off of the primary switch and before the determining whether the load current at the preferred switch Ipri is at or near 0 A (Amps), among other time periods.

At 310, the method 300 can include determining if the load current at the alternate switch Isec is greater than an upper current limit threshold Ilim_u. The upper current limit threshold can, in some embodiments, be based on an inrush current threshold of the switches of the static transfer switch 106 (FIG. 1 or FIG. 2). The inrush current threshold can, in some embodiments, be based on a thermal operating limit of the switches. The load current at the alternate switch can be measured using, for example, current sensors.

The static transfer switch 106 (FIG. 1 or FIG. 2) can, in some embodiments, include the alternate switch. The alternate switch can, in some embodiments, include one or more switches. For example, the static transfer switch 106 (FIG. 1 or FIG. 2) can include an alternate switch to connect each phase of the alternate power source to the load 108 (FIG. 1 or FIG. 2) using algorithm 220 of FIG. 3.

At 312, the method 300 can include turning off the alternate switch. The alternate switch can, in some embodiments, be turned off in response to the load current at the alternate switch being greater than the upper current limit threshold. The alternate switch can, in some embodiments, be turned off when the load current at the alternate switch is greater than or equal to the upper current limit threshold.

At 314, the method 300 can include determining if the load current at the alternate switch Isec is less than a lower current limit threshold Ilim_l. The method 300 can, in some embodiments, include determining if the load current at the alternate switch Isec is less than or equal to a lower current limit threshold Ilim_l. The lower current limit threshold can, in some embodiments, be a value between 0 A and the upper current limit threshold Ilim_u. The method 300 can, in some embodiments, include continuing to monitor the load current at the alternate switch until the load current at the alternate switch is less than the lower current limit threshold.

At 316, the method 300 can include turning on the alternate switch. The alternate switch can, in some embodiments, be turned on in response to the load current at the alternate switch being less than the lower current limit threshold. The alternate switch can, in some embodiments, be turned on when the load current at the alternate switch is less than or equal to the lower current limit threshold.

At 318, the method 300 can include determining if the time the FCL algorithm is implemented since block 308 to control the switching of the alternate switch is greater than transfer time limit Ttrans_max. The method 300 can, in some embodiments, include continuing to control the switching of the alternate switch using the FCL algorithm based on the upper and lower current limit threshold until the time exceeds the transfer time limit Ttrans_max. The method 300 can, in some embodiments, include ending the control of the switching of the alternate switch using the FCL algorithm based on the upper and lower current limit threshold in response to the time exceeding the transfer time limit Ttrans_max. In some embodiments, the transfer time limit Ttrans_max may be associated with how long of a duration the current limiting functionality can be performed using the static transfer switch 106 (FIG. 1) and the solid-state switch devices of the static transfer switch 106. That is, the current limiting function of these components can dissipate at least some of the heat. Accordingly, in some embodiments, the transfer time limit Ttrans_max can be based on a predicted lifetime of these components, the number of transfers expected over the predicted lifetime, and/or the percentage of lifetime lost during each transfer.

It should be appreciated that the power sources can include one or more phases, and the operations of method 300 can be performed at each of the one or more phases to transfer load 108 (FIG. 1 or FIG. 2) between power sources.

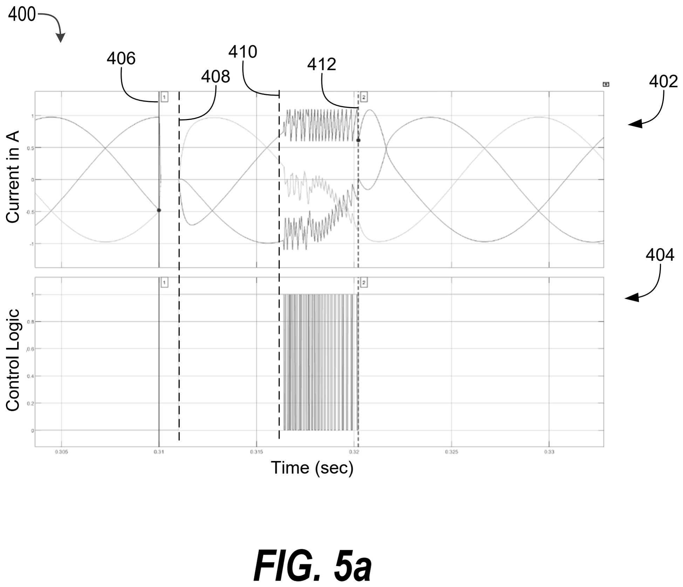

FIG. 5a is a graphical illustration of current-time charts 400 for a primary side of a load transformer of an example system, according to some embodiments. The system can be an embodiment of system 100 of FIGS. 1 or FIG. 2, although other systems are possible. The current-time charts 400 can be implemented with any combination of components and/or subsystems of system 100 of FIGS. 1 or FIG. 2, or system 200 of FIG. 3.

Chart 402 shows waveforms of three-phases of load current at a primary side of a load transformer during a transfer process using the FCL algorithm. Chart 404 shows a respective control logic used to switch, for example, the alternate switch or switches located on each phase of the static transfer switch open and closed during the transfer process in accordance with the current limiting range of the FCL algorithm. For example, as shown in FIG. 5a, the current limiting range can include a lower current limit of 0.6 p.u. (per unit) of nominal current and can include an upper current limit of 1.1 p.u. of the nominal current.

At time 406, load current at the three-phases of the load transformer can reduce to a low current threshold having a value at or near 0 A. For example, the low current threshold can be between 0 to 2 A. The load current can, in some embodiments, reduce to below the low current threshold in response to disconnecting the load from the preferred power source by turning the preferred switches of the static transfer switch off.

At time 408, the three alternate switches of the static transfer switch can be driven to turn on to connect the load to the alternate power source at the three-phases. Once turned on, current and power can be transferred from the alternate power source to the load. However, a mismatch can exist between the load transformer flux and the alternate power source voltage, which can, in some embodiments, cause saturation at the load transformer and can cause inrush current to build up at the alternate switches.

At time 410, the alternate switches of the static transfer switch can be selectively switched open and closed at a switching frequency sufficient to maintain load current within a current limiting range from time 410 to time 412 using the FCL algorithm, which can, in some embodiments, be used to control the load current and shape the flux at the load transformer to match with the alternate source voltage. The current-time charts 400 show that the current limiting range of the FCL algorithm can improve a transfer time of the static transfer switch with limited inrush current.

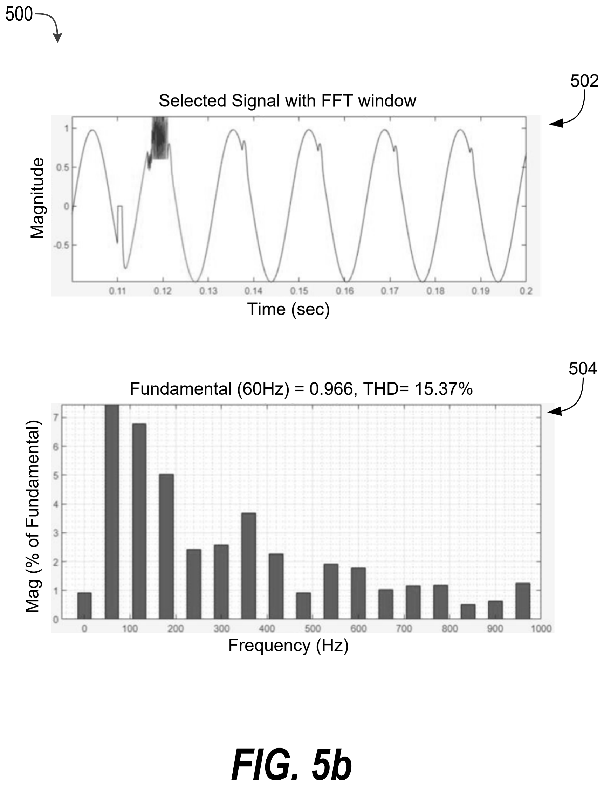

FIG. 5b is a graphical illustration of harmonics analysis charts 500 for the example system of FIG. 5a, according to some embodiments. The harmonics analysis charts 500 can be implemented with any combination of components and/or subsystems of system 100 of FIGS. 1 or FIG. 2, or system 200 of FIG. 3.

Chart 502 shows a frequency signal of a first phase during the transfer process of FIG. 5a. Chart 504 shows a total harmonics distortion (THD) of the first phase during the transfer process. For example, as shown in FIG. 5b, the THD from the FCL algorithm can be 15.4% for a first cycle after the transfer process, which can, in some embodiments, be the first cycle after time 412 (FIG. 5a).

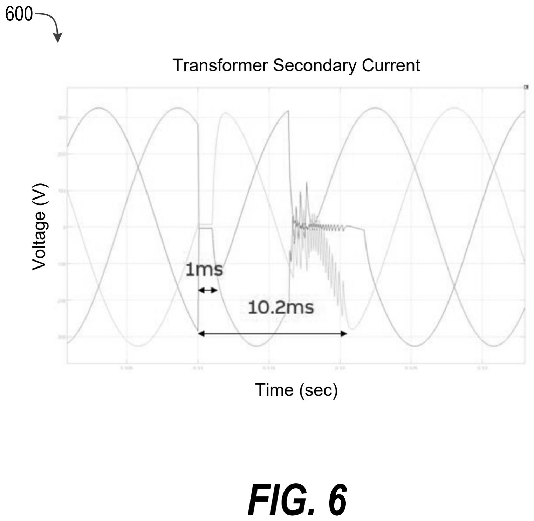

FIG. 6 is a graphical illustration of a current-time chart 600 for a secondary side of the load transformer of the example system of FIG. 5a, according to some embodiments. The current-time chart 600 can be implemented with any combination of components and/or subsystems of system 100 of FIGS. 1 or FIG. 2, or system 200 of FIG. 3.

Chart 600 shows secondary side voltage waveforms of the load transformer for the same simulation as shown in FIGS. 5a and 5b. The voltage waveform at the secondary side of the load transformer can experience fluctuations when the alternative switch is turned on at time 408 in FIG. 5a, which causes the power and current to be transferred from the alternative power source to the load. During the controlling of the switching of the alternate switches during the transfer process using the FCL algorithm, the average voltage at the secondary side of the load transformer can be approximately 0 V from a balance of a load inductor (not shown), which can mean that no power transfer from the alternate power source is supplied to the load during the transfer process time period.

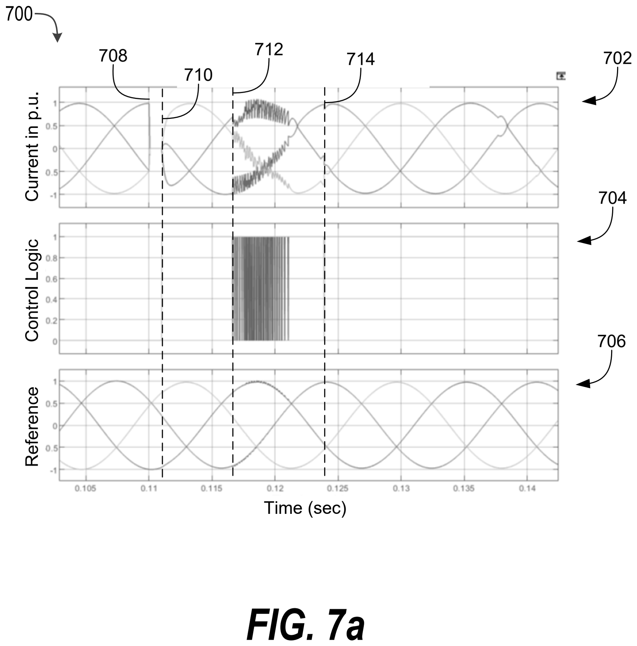

FIG. 7a is a graphical illustration of current-time charts 700 for a primary side of a load transformer of an example system, according to some embodiments. The system can be an embodiment of system 100 of FIGS. 1 or FIG. 2, although other systems are possible. The current-time charts 700 can be implemented with any combination of components and/or subsystems of system 100 of FIGS. 1 or FIG. 2, or system 200 of FIG. 3.

Chart 702 shows waveforms of three-phases of load current at a primary side of a load transformer during a transfer process using the FCL algorithm. Chart 704 shows a respective control logic used to switch, for example, the alternate switch or switches located on each phase of the static transfer switch open and closed during the transfer process in accordance with a variable current limiting range of the FCL algorithm. Chart 706 shows a reference current of the secondary power source, which can, in some embodiments, be used to calculate the variable current limiting range. For example, as shown in FIG. 7a, the variable current limiting range of the FCL algorithm can have a sinusoidal shape with a boundary following the reference current, and which can, in some embodiments, be calculated based on an alternate source voltage and load impedance.

At time 708, load current at the three-phases of the load transformer can reduce to below the low current threshold. The load current can, in some embodiments, reduce to below the low current threshold in response to disconnecting the load from the preferred power source by turning the preferred switches of the static transfer switch off.

At time 710, the three alternate switches of the static transfer switch can be driven to turn on to connect the load to the alternate power source at the three-phases. Once turned on, current and power can be transferred from the alternate power source to the load. However, a mismatch can exist between the load transformer flux and the alternate power source voltage, which can, in some embodiments, cause saturation at the load transformer and can cause inrush current to build up at the alternate switches.

At time 712, the alternate switches of the static transfer switch can be selectively switched open and closed at a switching frequency sufficient to maintain load current within the variable current limiting range from time 712 to time 714 using the FCL algorithm, which can, in some embodiments, be used to control the load current and shape the flux at the load transformer to match with the alternate source voltage. The current-time charts 700 show that the variable current limiting range of the FCL algorithm can improve a transfer time of the static transfer switch with limited inrush current. The variable current limiting range of the FCL algorithm can, in some embodiments, further improve a transfer time of the static transfer switch with limited inrush current as compared to the fixed current limiting range of the FCL algorithm.

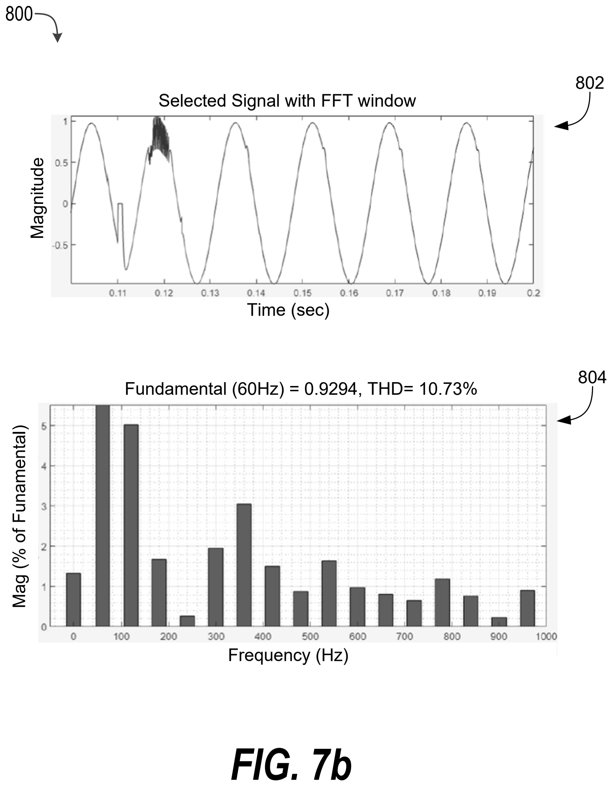

FIG. 7b is a graphical illustration of harmonics analysis charts 800 for the example system of FIG. 7a, according to some embodiments. The harmonics analysis charts 800 can be implemented with any combination of components and/or subsystems of system 100 of FIGS. 1 or FIG. 2, or system 200 of FIG. 3.

Chart 802 shows a frequency signal of a first phase during the transfer process of FIG. 7a. Chart 804 shows a total harmonics distortion (THD) of the first phase during the transfer process. For example, as shown in FIG. 7b, the THD from the variable current limiting range of the FCL algorithm can be 10.73% for a first cycle after the transfer process, which can, in some embodiments, be the first cycle after time 714 (FIG. 7a).

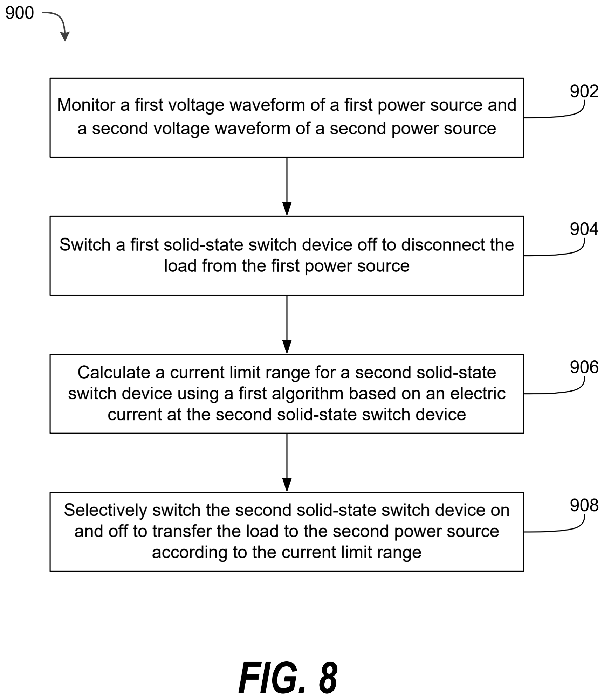

FIG. 8 is a flow diagram of a method 900 for transferring a load between power sources using a FCL algorithm, according to some embodiments. One or more portions of method 900 can be implemented using system 100 of FIGS. 1 or 2, or system 200 of FIG. 3, although other systems are possible.

At 902, the method 900 can include monitoring a first voltage waveform of a first power source connectable to a load by a first solid-state switch device of the static transfer switch and a second voltage waveform of a second power source connectable to the load by a second solid-state switch device of the static transfer switch. In some embodiments, a controller associated with a static transfer switch of an AC distribution system can monitor the first and second voltage waveform of the first and second power sources, respectively. As shown in FIGS. 1 or 2, the first power source can be first power source 102, the second power source can be second power source 104, and the controller can be a control circuit 120.

At 904, the method 900 can include switching the first solid-state switch device off to disconnect the load from the first power source. The first solid-state switch device can be switched off in response to detecting a power quality event affecting the first power source. As shown in FIGS. 1 or 2, the first solid-state switch device is shown as first solid-state switch device 114.

At 906, the method 900 can include calculating a current limiting range for the second solid-state switch device using an algorithm based on an electric current at the second solid-state switch device. As shown in FIGS. 1 or 2, the second solid-state switch device is shown as second solid-state switch device 118. The algorithm can correspond to the FCL algorithm, which can correspond to algorithm 220 of FIG. 3.

At 908, the method 900 can include selectively switching the second solid-state switch device on and off to transfer the load to the second power source according to the current limiting range. In some embodiments, the current limiting range can include an upper limit value and a lower limit value relative a nominal current of the second solid-state switch device. In some embodiments, the current limiting range can be configured to maintain the electric current at the second solid-state switch device below a maximum inrush current threshold.

The controller can, according to some embodiments, be configured to selectively switch the second solid-state switch device on and off to connect the load to the second power source according to the current limiting range in response to the electric current at the first solid-state switch device decreasing to a first current value. In some embodiments, the controller can be configured to selectively switch the second solid-state switch device on and off to connect the load to the second power source according to the current limiting range at an instance that the electric current at the first solid-state switch device decreases to the first current value. The current limiting range can, in some embodiments, be a fixed current limiting range. The current limiting range can, in other embodiments, be a variable current limiting range. In some embodiments, the first current value can be at or near 0 A (Amps).

In some embodiments, the upper current limit value can be configured to be less than the maximum inrush current threshold of the second solid-state switch device. In some embodiments, the lower current limit value can be configured to be greater than a second current value and less than the upper current limit value. In some embodiments, the upper current limit value can further be configured to be greater than the nominal current of the second solid-state switch device, and the lower current limit value can further be configured to be less than the nominal current of the second solid-state switch device. In some embodiments, the second current value can be at or near 0 A. In some embodiments, each of the upper limit value and the lower limit value of the current limiting range can be fixed absolute values, respectively.

Selectively switching the second solid-state switch device on and off to transfer the load to the second power source according to the current limiting range can, in some embodiments, include in response to the monitored electric current falling under the lower limit value, switching the second solid-state switch device on and connecting the load to the second power source, and in response to the monitored electric current exceeding the upper limit value, switching the second solid-state switch device off and disconnecting the load to the second power source. In some embodiments, the controller can be configured to selectively switch the second solid-state switch device on and off in accordance with the upper limit value and the lower limit value to maintain the electric current at a defined trajectory to reduce a total harmonic distortion when transferring the load to the second power source.

Method 900 can, in some embodiments, include calculating a third value corresponding to a flux at a load transformer and, in response to the flux at the load transformer matching a flux at the second solid-state switch device, switching the second solid-state switch device on to transfer the load to the second power source. In some embodiments, the third value corresponding to the flux at the load transformer can be based on a flux of the first power source when the first solid-state switch device is switched off to disconnect the load from the first power source. In some embodiments, the second solid-state switch device can be switched on to the closed position and maintain the load connected to the second power source in response to determining a load transformer flux matches a flux of the second power source. In some embodiments, the flux at the second power source can be determined based on a voltage from the second power source measured at the second solid-state switch device.

Method 900 is described with reference to the load initially connected to the first power source and transferring the load from the first power source to the second power source in response to detecting an abnormal condition at the first power source. However, it should be appreciated that a similar method as method 900 can be implemented during scenarios where the load is initially connected to the second power source and transferring the load from the second power source to the first power source in response to detecting an abnormal condition at the second power source.

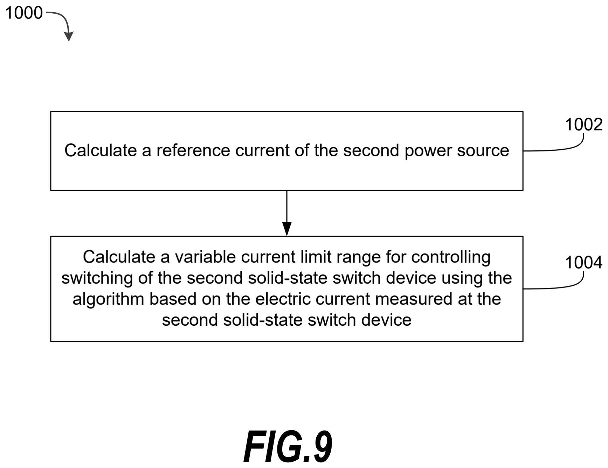

FIG. 9 is a flow diagram of a method 1000 for calculating a variable current limiting range, according to some embodiments. Method 1000 can be an embodiment of operation 906 of method 900, according to some embodiments. One or more portions of method 1000 can be implemented using system 100 of FIGS. 1 or 2, or system 200 of FIG. 3, although other systems are possible.

At 1002, the method 1000 can include calculating a reference current of the second power source. The reference current can, in some embodiments, be calculated by a controller (e.g., control circuit) of a static transfer switch system implementing the method 1000. The reference current can, in some embodiments, be calculated based on an alternate source voltage and a load impedance.

At 1004, the method 1000 can include calculating a variable current limiting range for controlling switching of the second solid-state switch device using the algorithm based on the electric current measured at the second solid-state switch device. The variable current limiting range can, in some embodiments, be calculated based on the calculated reference current. The variable current limiting range can, in some embodiments, have a variable upper current limit and a variable lower current limit determined based on the reference current. The variable current limiting range can, in some embodiments, be based on the reference current to shape a load current waveform into a sinusoidal shape with a boundary following the reference current. The variable current limit can, in some embodiments, be configured to improve a transfer time for connecting the load to the second power source and improve a total harmonic distortion at a given phase of the load transformer.

All prior patents and publications referenced herein are incorporated by reference in their entireties.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it can. Furthermore, the phrases "in another embodiment" and "in some other embodiments" as used herein do not necessarily refer to a different embodiment, although it can. All embodiments of the disclosure are intended to be combinable without departing from the scope or spirit of the disclosure.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "between" does not necessarily require being disposed directly next to other elements. Generally, this term means a configuration where something is sandwiched by two or more other things. At the same time, the term "between" can describe something that is directly next to two opposing things. Accordingly, in any one or more of the embodiments disclosed herein, a particular structural component being disposed between two other structural elements can be: disposed directly between both of the two other structural elements such that the particular structural component is in direct contact with both of the two other structural elements; disposed directly next to only one of the two other structural elements such that the particular structural component is in direct contact with only one of the two other structural elements; disposed indirectly next to only one of the two other structural elements such that the particular structural component is not in direct contact with only one of the two other structural elements, and there is another element which juxtaposes the particular structural component and the one of the two other structural elements; disposed indirectly between both of the two other structural elements such that the particular structural component is not in direct contact with both of the two other structural elements, and other features can be disposed therebetween; or any combination(s) thereof.

### ASPECTS

Various Aspects are described below. It is to be understood that any one or more of the features recited in the following Aspect(s) can be combined with any one or more other Aspect(s).

Aspect 1. A method comprising: monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch; in response to detecting a power quality event affecting the first power source, switching, with the controller, the first solid-state switch device off to disconnect the load from the first power source; determining, with the controller, a current limiting range for the second solid-state switch device using an algorithm based on an electric current at the second solid-state switch device; and selectively switching, with the controller, the second solid-state switch device on and off to connect the load to the second power source according to the current limiting range; wherein the current limiting range comprises an upper limit value and a lower limit value relative to a nominal current of the second solid-state switch device, wherein the upper limit value is defined based on a maximum inrush current threshold.

Aspect 2. The method according to aspect 1, wherein the controller is configured to selectively switch the second solid-state switch device on and off to connect the load to the second power source according to the current limiting range after the electric current at the first solid-state switch device decreases to a low current threshold.

Aspect 3. The method according to any of the preceding aspects, wherein selectively switching the second solid-state switch device on and off to connect the load to the second power source comprises: in response to the monitored electric current falling under the lower limit value, switching, with the controller, the second solid-state switch device on and connecting the load to the second power source; and in response to the monitored electric current exceeding the upper limit value, switching, with the controller, the second solid-state switch device off and disconnecting the load to the second power source; wherein the controller is configured to selectively switch the second solid-state switch device on and off in accordance with the upper limit value and the lower limit value to maintain the electric current at a defined trajectory.

Aspect 4. The method according to any of the preceding aspects, wherein the upper limit value and the lower limit value are fixed absolute values.

Aspect 5. The method according to any of the preceding aspects, wherein determining the current limiting range for the second solid-state switch device using the algorithm comprises: calculating, with the controller, a reference current of the second power source based on a second power source voltage and a load impedance; and calculating, with the controller, a variable current limiting range for controlling the selective switching of the second solid-state switch device using the algorithm based on the electric current measured at the second solid-state switch device; wherein the variable current limiting range comprises a variable upper current limit and a variable lower current limit determined based on the reference current.

Aspect 6. The method according to aspect 5, wherein the controller is configured to calculate the variable current limiting range to shape a waveform of the electric current into a sinusoidal shape with a boundary following the reference current; wherein the controller is configured to improve a transfer time for connecting the load to the second power source and further improve the total harmonic distortion at a given phase of the electric current during the transfer based on the variable current limiting range.

Aspect 7. The method according to any of the preceding aspects, further comprising: calculating, with the controller, a third value corresponding to a flux at a load transformer; and in response to the flux at the load transformer matching a flux at the second solid-state switch device, switching, with the controller, the second solid-state switch device on to transfer the load to the second power source; wherein the third value is based on a flux of the first power source when the first solid-state switch device is switched off to disconnect the load from the first power source.

Aspect 8. The method according to any of the preceding aspects, wherein the upper limit value is configured to be less than the maximum inrush current threshold of the second solid-state switch device and greater than the nominal current of the second solid-state switch device; wherein the lower limit value is configured to be greater than 0 A and less than the nominal current of the second solid-state switch device.

Aspect 9. A system comprising: a static transfer switch, at least one phase of the static transfer switch comprising: a first solid-state switch device selectively operable to connect a load to a first power source; and a second solid-state switch device selectively operable to connect the load to a second power source; and a control circuit associated with the static transfer switch, the control circuit configured to perform operations comprising: monitor a first voltage waveform of the first power source and a second voltage waveform of the second power source; in response to detecting a power quality event affecting the first power source, switch the first solid-state switch device off to disconnect the load from the first power source; determine a current limiting range for the second solid-state switch device using an algorithm based on an electric current at the second solid-state switch device; and selectively switch the second solid-state switch device on and off to connect the load to the second power source according to the current limiting range; wherein the current limiting range comprises an upper limit value and a lower limit value relative to a nominal current of the second solid-state switch device, wherein the upper limit value is defined based on a maximum inrush current threshold.

Aspect 10. The system according to aspect 9, wherein the control circuit is configured to selectively switch the second solid-state switch device on and off to connect the load to the second power source according to the current limiting range after the electric current at the first solid-state switch device decreases to a first current value.

Aspect 11. The system according to aspects 9 or 10, wherein selectively switching the second solid-state switch device on and off to connect the load to the second power source comprises: in response to the monitored electric current falling under the lower limit value, switch the second solid-state switch device on and connecting the load to the second power source; and in response to the monitored electric current exceeding the upper limit value, switch the second solid-state switch device off and disconnecting the load to the second power source; wherein the control circuit is configured to selectively switch the second solid-state switch device on and off to maintain the electric current at a defined trajectory.

Aspect 12. The system according to aspects 9, 10, or 11, wherein the upper limit value and the lower limit value are fixed absolute values.

Aspect 13. The system according to aspects 9, 10, 11, or 12, wherein determining the current limiting range for the second solid-state switch device using the algorithm comprises: calculate a reference current of the second power source based on a second power source voltage and a load impedance; and calculate a variable current limiting range for controlling the selective switching of the second solid-state switch device using the algorithm based on the electric current measured at the second solid-state switch device; wherein the variable current limiting range comprises a variable upper current limit and a variable lower current limit determined based on the reference current.

Aspect 14. The system according to aspect 13, wherein the control circuit is configured to calculate the variable current limiting range to shape a waveform of the electric current into a sinusoidal shape with a boundary following the reference current; wherein the control circuit is configured to improve a transfer time for connecting the load to the second power source and further improve the total harmonic distortion at a given phase of the electric current during the transfer based on the variable current limiting range.

Aspect 15. The system according to aspects 9, 10, 11, 12, 13, or 14, wherein the upper limit value is less than the maximum inrush current threshold of the second solid-state switch device and greater than the nominal current of the second solid-state switch device; wherein the lower limit value is greater than a second current value and less than the nominal current of the second solid-state switch device.

Aspect 16. The system according to aspects 9, 10, 11, 12, 13, 14, or 15, wherein the selectively switching of the second solid-state switch device on and off to connect the load to the second power source further comprises: calculate a third value corresponding to a flux at a load transformer; and in response to the flux at the load transformer matching a flux at the second solid-state switch device, switch the second solid-state switch device on to transfer the load to the second power source; wherein the third value is based on a flux of the first power source when the first solid-state switch device is switched off to disconnect the load from the first power source.

Aspect 17. The system according to aspects 9, 10, 11, 12, 13, 14, 15, or 16, wherein the first solid-state switch device comprises at least one of a thyristor, a SiC metal-oxide-semiconductor field-effect-transistor, a Si insulated-gate bipolar transistor, or an integrated gate-commutated thyristor; wherein the second solid-state switch device comprises at least one of the SiC metal-oxide-semiconductor field-effect-transistor, the Si insulated-gate bipolar transistor, or the integrated gate-commutated thyristor.

Aspect 18. The system according to aspects 9, 10, 11, 12, 13, 14, 15, 16, or 17, further comprising: a first sensor device positioned on a first branch of the static transfer switch and coupled to the control circuit, the first sensor device configured to monitor at least one parameter of the first solid-state switch device; a second sensor device positioned on a second branch of the static transfer switch, the second sensor device configured to monitor at least one parameter of the second solid-state switch device; and a comparator device configured to compare the at least one parameter of the second solid-state switch device to a first reference voltage corresponding to the upper limit value and a second reference voltage corresponding to the lower limit value; wherein the control circuit is configured to determine a turn-on instant and a turn-off instant of the second solid-state switch device based on an output signal from the comparator device.

Aspect 19. The system according to aspects 9, 10, 11, 12, 13, 14, 15, 16, 17, or 18, further comprising: a voltage clamping circuit coupled to at least the second solid-state switch device, the voltage clamping circuit configured to fix at least one of a positive or negative peak of a corresponding voltage waveform to a defined voltage; wherein, during the selective switching of the second solid-state switch device to limit the electric current in the current limiting range, the control circuit is configured to monitor an energy dissipation at the second solid-state switch device and the voltage clamping circuit according to a corresponding thermal limit.

Aspect 20. The system according to aspect 19, wherein the operations further comprising: monitoring a time period for transferring the load from the first power source to the second power source using the second solid-state switch device; and in response to the time period exceeding a time limit, switching the second solid-state switch device off to disconnect the load from the second power source; wherein the time limit is at least partially based on an energy dissipation capacity of the voltage clamping circuit coupled to at least the second solid-state switch device.

It is to be understood that changes can be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A method comprising:
monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch;
in response to detecting a power quality event affecting the first power source, switching, with the controller, the first solid-state switch device off to disconnect the load from the first power source;
determining, with the controller, a current limiting range for the second solid-state switch device using an algorithm based on an electric current at the second solid-state switch device; and
selectively switching, with the controller, the second solid-state switch device on and off to connect the load to the second power source according to the current limiting range;
wherein the current limiting range comprises an upper limit value and a lower limit value relative to a nominal current of the second solid-state switch device, wherein the upper limit value is defined based on a maximum inrush current threshold.

2. The method of claim 1, wherein the controller is configured to selectively switch the second solid-state switch device on and off to connect the load to the second power source according to the current limiting range after the electric current at the first solid-state switch device decreases to a low current threshold.

3. The method of claim 1 or 2, wherein selectively switching the second solid-state switch device on and off to connect the load to the second power source comprises:
in response to the monitored electric current falling under the lower limit value, switching, with the controller, the second solid-state switch device on and connecting the load to the second power source; and
in response to the monitored electric current exceeding the upper limit value, switching, with the controller, the second solid-state switch device off and disconnecting the load to the second power source;
wherein the controller is configured to selectively switch the second solid-state switch device on and off in accordance with the upper limit value and the lower limit value to maintain the electric current at a defined trajectory.

4. The method of claim 3, wherein the upper limit value and the lower limit value are fixed absolute values.

5. The method of claim 3 or 4, wherein determining the current limiting range for the second solid-state switch device using the algorithm comprises:
calculating, with the controller, a reference current of the second power source based on a second power source voltage and a load impedance; and
calculating, with the controller, a variable current limiting range for controlling the selective switching of the second solid-state switch device using the algorithm based on the electric current measured at the second solid-state switch device;
wherein the variable current limiting range comprises a variable upper current limit and a variable lower current limit determined based on the reference current.

6. The method of claim 5, wherein the controller is configured to calculate the variable current limiting range to shape a waveform of the electric current into a sinusoidal shape with a boundary following the reference current;
wherein the controller is configured to improve a transfer time for connecting the load to the second power source and further improve a total harmonic distortion at a given phase of the electric current during the transfer based on the variable current limiting range.

7. The method of one of claims 2 to 6, further comprising:
calculating, with the controller, a third value corresponding to a flux at a load transformer; and
in response to the flux at the load transformer matching a flux at the second solid-state switch device, switching, with the controller, the second solid-state switch device on to transfer the load to the second power source;
wherein the third value is based on a flux of the first power source when the first solid-state switch device is switched off to disconnect the load from the first power source.

8. The method of one of claims 2 to 7, wherein the upper limit value is configured to be less than the maximum inrush current threshold of the second solid-state switch device and greater than the nominal current of the second solid-state switch device;
wherein the lower limit value is configured to be greater than 0 A and less than the nominal current of the second solid-state switch device.

9. A system comprising:
a static transfer switch, at least one phase of the static transfer switch comprising:
a first solid-state switch device selectively operable to connect a load to a first power source; and
a second solid-state switch device selectively operable to connect the load to a second power source; and
a control circuit associated with the static transfer switch, the control circuit configured to perform operations comprising:
monitor a first voltage waveform of the first power source and a second voltage waveform of the second power source;
in response to detecting a power quality event affecting the first power source, switch the first solid-state switch device off to disconnect the load from the first power source;
determine a current limiting range for the second solid-state switch device using an algorithm based on an electric current at the second solid-state switch device; and
selectively switch the second solid-state switch device on and off to connect the load to the second power source according to the current limiting range;
wherein the current limiting range comprises an upper limit value and a lower limit value relative to a nominal current of the second solid-state switch device, wherein the upper limit value is defined based on a maximum inrush current threshold.

10. The system of claim 9, wherein the control circuit is configured to selectively switch the second solid-state switch device on and off to connect the load to the second power source according to the current limiting range after the electric current at the first solid-state switch device decreases to a first current value.

11. The system of claim 10, wherein selectively switching the second solid-state switch device on and off to connect the load to the second power source comprises:
in response to the monitored electric current falling under the lower limit value, switch the second solid-state switch device on and connecting the load to the second power source; and
in response to the monitored electric current exceeding the upper limit value, switch the second solid-state switch device off and disconnecting the load to the second power source;
wherein the control circuit is configured to selectively switch the second solid-state switch device on and off to maintain the electric current at a defined trajectory.

12. The system of claim 11, wherein the upper limit value and the lower limit value are fixed absolute values.

13. The system of claim 11 or 12, wherein determining the current limiting range for the second solid-state switch device using the algorithm comprises:
calculate a reference current of the second power source based on a second power source voltage and a load impedance; and
calculate a variable current limiting range for controlling the selective switching of the second solid-state switch device using the algorithm based on the electric current measured at the second solid-state switch device;
wherein the variable current limiting range comprises a variable upper current limit and a variable lower current limit determined based on the reference current.

14. The system of claim 13, wherein the control circuit is configured to calculate the variable current limiting range to shape a waveform of the electric current into a sinusoidal shape with a boundary following the reference current;
wherein the control circuit is configured to improve a transfer time for connecting the load to the second power source and further improve a total harmonic distortion at a given phase of the electric current during the transfer based on the variable current limiting range.

15. The system of one of claims 10 to 14, wherein the upper limit value is less than the maximum inrush current threshold of the second solid-state switch device and greater than the nominal current of the second solid-state switch device;
wherein the lower limit value is greater than a second current value and less than the nominal current of the second solid-state switch device.

16. The system of one of claims 9 to 15, wherein the selectively switching of the second solid-state switch device on and off to connect the load to the second power source further comprises:
calculate a third value corresponding to a flux at a load transformer; and
in response to the flux at the load transformer matching a flux at the second solid-state switch device, switch the second solid-state switch device on to transfer the load to the second power source;
wherein the third value is based on a flux of the first power source when the first solid-state switch device is switched off to disconnect the load from the first power source.

17. The system of one of claims 9 to 16, wherein the first solid-state switch device comprises at least one of a thyristor, a SiC metal-oxide-semiconductor field-effect-transistor, a Si insulated-gate bipolar transistor, or an integrated gate-commutated thyristor;
wherein the second solid-state switch device comprises at least one of the SiC metal-oxide-semiconductor field-effect-transistor, the Si insulated-gate bipolar transistor, or the integrated gate-commutated thyristor.

18. The system of one of claims 9 to 17, further comprising:
a first sensor device positioned on a first branch of the static transfer switch and coupled to the control circuit, the first sensor device configured to monitor at least one parameter of the first solid-state switch device;
a second sensor device positioned on a second branch of the static transfer switch, the second sensor device configured to monitor at least one parameter of the second solid-state switch device; and
a comparator device configured to compare the at least one parameter of the second solid-state switch device to a first reference voltage corresponding to the upper limit value and a second reference voltage corresponding to the lower limit value;
wherein the control circuit is configured to determine a turn-on instant and a turn-off instant of the second solid-state switch device based on an output signal from the comparator device.

19. The system of one of claims 9 to 18, further comprising:
a voltage clamping circuit coupled to at least the second solid-state switch device, the voltage clamping circuit configured to fix at least one of a positive or negative peak of a corresponding voltage waveform to a defined voltage;
wherein, during the selective switching of the second solid-state switch device to limit the electric current in the current limiting range, the control circuit is configured to monitor an energy dissipation at the second solid-state switch device and the voltage clamping circuit according to a corresponding thermal limit.

20. The system of claim 19, wherein the operations further comprising:
monitoring a time period for transferring the load from the first power source to the second power source using the second solid-state switch device; and
in response to the time period exceeding a time limit, switching the second solid-state switch device off to disconnect the load from the second power source;
wherein the time limit is at least partially based on an energy dissipation capacity of the voltage clamping circuit coupled to at least the second solid-state switch device.
